Europäisches Patentamt

European Patent Office

Office européen des brevets

(11) Veröffentlichungsnummer: **0 439 636 A1**

# EUROPÄISCHE PATENTANMELDUNG

(21) Anmeldenummer: 90101631.1

(51) Int. Cl.5: **B01D 61/44**

(22) Anmeldetag: 27.01.90

(43) Veröffentlichungstag der Anmeldung:
**07.08.91 Patentblatt 91/32**

(84) Benannte Vertragsstaaten:
**AT BE CH DK ES FR GB IT LI NL SE**

(71) Anmelder: **Kali-Chemie Aktiengesellschaft**
**Postfach 220, Hans-Böckler-Allee 20**
**W-3000 Hannover 1(DE)**

(72) Erfinder: **Bosse, Jochen**
**Gehaegestrasse 27 A**
**W-3000 Hannover 1(DE)**

Erfinder: **Hartmann, Ulrich**
**Heinrich-Stamme-Str. 5A**
**W-3000 Hannover 1(DE)**
Erfinder: **Musall, Reimar**
**Raabeweg 11**
**W-3167 Burgdorf(DE)**

(74) Vertreter: **Lauer, Dieter, Dr.**
**c/o Kali-Chemie Aktiengesellschaft Postfach**
**220**
**W-3000 Hannover 1(DE)**

(54) **Verfahren zur Herstellung von kohlensauren Salzen von Alkalimetallen.**

(57) Beschrieben wird ein energiesparendes umweltschonendes Verfahren zur Herstellung von Alkalicarbonaten durch Elektrodialyse von Alkalisalzen (1) und Carbonisation der erhaltenen Alkalihydroxidlösung.

FIG. 2

## KALI-CHEMIE AKTIENGESELLSCHAFT VERFAHREN ZUR HERSTELLUNG VON KOHLENSAUREN SALZEN VON ALKALIMETALLEN

Die vorliegende Erfindung betrifft ein Verfahren zur Herstellung von kohlensauren Salzen von Alkalimetallen aus wässrigen Alkalimetallsalzlösungen durch Gewinnung einer hochreinen wässrigen Lösung des Alkalimetallhydroxids und anschließender Carbonisation dieser Alkalimetallhydroxidlösung.

Die bekannten kohlensaure Salze der Alkalimetalle finden in verschiedenen technischen Gebieten ihre Verwendung.

Lithiumcarbonat dient u.a. zur Erzeugung von Glasuren auf Porzellan.

Natriumkarbonat beispielsweise ist die nach Natriumchlorid technisch wichtigste Natriumverbindung und wird u.a. für die Glasherstellung und die Wasserenthärtung, z.B. für die chemische Industrie, in großem Umfang benötigt. Daneben dient es als Reagenz in der analytischen Chemie und als Hilfsmittel in der Pharmazie.

Natriumhydrogencarbonat findet sich beispielsweise in Feuerlöschern. Ferner wird es in der Lebensmittelindustrie als Backhilfe oder zur Herstellung von Sprudelgetränken eingesetzt.

Kaliumcarbonat wird industriell beispielsweise bei der Glas- und Seifenherstellung sowie für Flüssigshampoos benötigt.

Kaliumhydrogencarbonat wird zur Herstellung von Lebensmitteln, z.B. als Backhilfsmittel, ferner in Mitteln zur Beeinflussung des Elektrolythaushaltes, beispielsweise bei Sportlern, verwendet.

Zur Herstellung der kohlensauren Salze der Alkalimetalle sind unterschiedliche Verfahren entwickelt worden.

Lithiumcarbonat wird beispielsweise durch Umsetzung von Lithiumsalzen und Carbonaten, insbesondere Natrium- oder Kaliumcarbonat, sowie durch Carbonisieren von Lithiumhydroxid gewonnen.

Natriumcarbonat kann in unreiner Form aus natürlichen Lagerstätten gewonnen werden, z.B. aus ägyptischen oder amerikanischen Natronseen. Eine großtechnisch durchgeführte Herstellungsmethode für Natriumcarbonat stellt das Solvay-Verfahren dar, welches von Kochsalz, Ammoniak und Kohlendioxid ausgeht. Die hierbei gewonnene Soda besitzt eine Reinheit von etwa 98%.

Natriumhydrogencarbonat und Kaliumhydrogencarbonat werden aus den Hydroxiden oder Carbonaten durch Kontaktieren mit überschüssigem Kohlendioxid (Übercarbonisierung) hergestellt (die Existenz von Lithiumhydrogencarbonat ist strittig).

Hochreine kohlensaure Salze von Alkalimetallen, wie sie u.a. in der Lebensmittelindustrie und der Pharmazie benötigt werden, werden nach dem Stand der Technik durch Carbonisierung der entsprechenden Alkalihydroxid-Lösung erhalten, welche durch Elektrolyse nach dem Quecksilberverfahren hergestellt worden ist. Wenn beispielsweise durch eine wäßrige Alkalichloridlösung elektrischer Gleichstrom geleitet wird, bildet sich am positiven Pol der Anode vorwiegend Chlorgas. Am negativen Pol, der Kathode, bildet sich Wasserstoffgas und Alkalihydroxid. Um eine Vermischung der Produkte zu vermeiden, wird in einer besonderen Ausführungsform jenes Verfahrens als Kathode Quecksilber eingesetzt. Das an der Kathode primär gebildete Alkalimetall löst sich in Quecksilber (Amalgambildung) und kann in einer weiteren Verfahrensstufe mit Wasser zu hochreinem Alkalihydroxid zersetzt werden. Das Quecksilberverfahren ist also ein modifiziertes Elektrolyseverfahren. Dem entscheidenden Vorteil des Quecksilberverfahrens - die hohe Reinheit der entstehenden Alkalilauge - steht jedoch der Nachteil entgegen, daß aus den Elektrolysezellen ständig kleine Mengen Quecksilber herausgetragen werden. Diese Quecksilberverluste setzen sich zusammen aus den Quecksilbermengen, die im Produkt verbleiben (etwa 1 bis 10 ppm in der Hydroxid-Lösung), sowie den mit der Abluft und Filterschlämmen ausgetragenen Quecksilbermengen. Hierdurch wird eine sorgfältige und teuere Reinigung der Produkte, der Abluft, des Abwassers und der Reaktionsrückstände notwendig, um Quecksilberemissionen zu verhindern.

Nach anderen Verfahren hergestellte kohlensaure Alkalisalze können erst durch aufwendige Reinigungsoperationen in reiner Form erhalten werden.

Aufgabe der Erfindung ist es, ein Verfahren zur Herstellung hochreiner kohlensaurer Salze der Alkalimetalle zur Verfügung zu stellen, welches die Nachteile der vorbekannten Verfahren verhindert.

Aufgabe der Erfindung ist es ferner, eine Vorrichtung zur Durchführung des erfindungsgemäßen Verfahrens zur Verfügung zu stellen.

Die Aufgabe der Erfindung wird gelöst durch das erfindungsgemäße Verfahren zur Herstellung von kohlensauren Salzen von Alkalimetallsalzlösungen durch Elektrodialyse der wäßrigen Alkalimetallsalzlösung und anschließender Carbonisation der dabei erhaltenen Alkalimetallhydroxidlösung.

Das erfindungsgemäße Verfahren zur Herstellung von kohlensauren Salzen von Alklaimetallen aus wäßrigen anorganischen Alkalimetallsalzlösungen unter Überführen der wäßrigen Alkalimetallsalzlösungen in eine Alkalimetallhydroxidlösung und deren anschließender Carbonisation ist dadurch gekennzeichnet, daß man

a) die Alkalimetallsalzlösung einer Elektrodialyse unterwirft, indem man in einen Elektrodialysator, in welchem sich zwischen einer Plus- und einer Minuselektrode mindestens eine an den den Elektroden zugewandten Seiten durch bipolare oder kationenselektive Membranen begrenzte und in drei Zellen X, Y und Z unterteilte Dialyseeinheit befindet, worin die mittlere Zelle Y von der der Pluselektrode zugewandten Zelle X durch eine anionenselektive Membran und von der der Minuselektrode zugewandten Zelle Z durch eine kationenselektive Membran abgeteilt ist, und die Zelle X auf der der Pluselektrode zugewandten Seite von der kationenselektiven Schicht der bipolaren Membran und die Zelle Z auf der der Minuselektrode zugewandten Seite von der anionenselektiven Schicht der bipolaren Membran begrenzt sind, als Feedstrom in Zelle Y die wässrige anorganische Alkalimetallsalzlösung einführt, als Feedstrom in Zelle X eine im wesentlichen salzfreie wäßrige Lösung der dem Alkalimetallsalz entsprechende Säure einführt und als Feedstrom in Zelle Z eine im wesentlichen salzfreie wäßrige Lösung des dem Alkalimetallsalz entsprechende Alkalimetallhydroxids einführt, durch Anlegen einer Gleichstromspannung elektrischen Strom durch den Elektrodialysator leitet und als Produktstrom aus Zelle Y eine abgereicherte Alkalimetallsalzlösung abführt, aus Zelle X eine angereicherte wässrige Lösung der dem Alkalimetallsalz entsprechenden anorganischen Säure abführt und als Produktstrom aus Zelle Z eine angereicherte Lösung des dem Alkalimetallsalz entsprechenden Alkalimetallhydroxids abführt und

b) die unter a) erhaltene Alkalimetallhydroxidlösung zur Carbonisierung in einen Carbonisator überführt und zur Bildung der kohlensauren Salze des Alkalimetalls mit gasförmigem Kohlendioxid und/oder einer Lösung des Hydrogencarbonats des Alkalimetalls vermischt und

c) die unter b) gebildeten kohlensauren Salze des Alkalimetalls abtrennt.

Im erfindungsgemäßen Verfahren können alle wasserlöslichen anorganischen Salze des betreffenden Alkalimetalls eingesetzt werden.

Als Säureanionen kommen in Frage die Anionen der Oxosäuren der Elemente der fünften Hauptgruppe, insbesondere Nitrat, Phosphat, Hydrogenphosphat und Dihydrogenphosphat; die Anionen der Oxosäuren der Elemente der sechsten Hauptgruppe, mit Ausnahme des Sauerstoffs, in verschiedenen Oxidationsstufen, insbesondere das Sulfat- und das Hydrogensulfatanion; die Halogenidanionen sowie die Anionen der Oxosäuren der Halogene in verschiedenen Oxidationsstufen.

Die Halogenidanionen werden bevorzugt eingesetzt. Insbesondere bevorzugt sind die Chloride.

Im erfindungsgemäßen Verfahren wird als wässrige anorganische Alkalimetallsalzlösung vorzugsweise eine wässrige Lösung eines Kaliumsalzes, insbesondere von Kaliumchlorid eingesetzt.

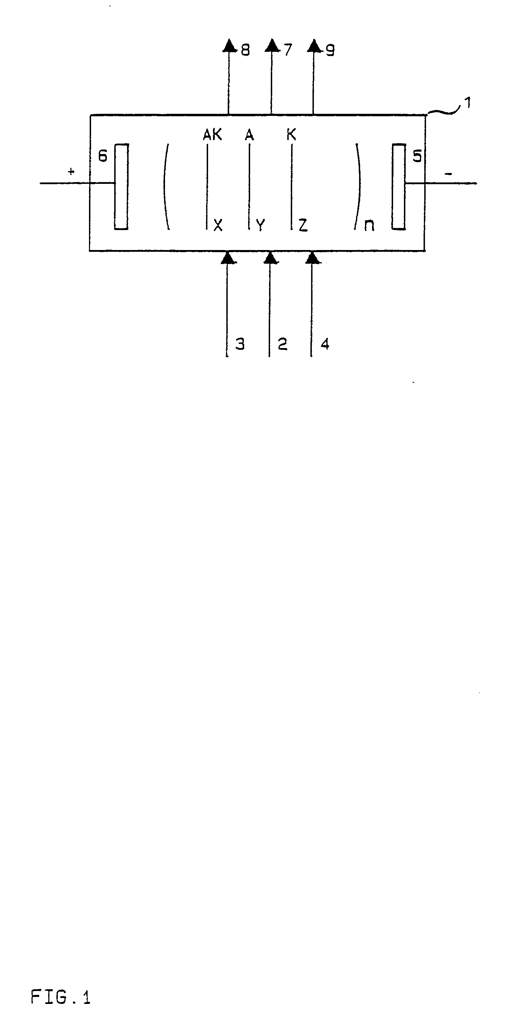

Im erfindungsgemäßen Verfahren können an sich bekannte Elektrodialysatoren eingesetzt werden. Die Wirkungsweise eines im erfindungsgemäßen Verfahren einsetzbaren Elektrodialysators veranschaulicht Figur 1. Der Dialysator 1 enthält einen Kathodenraum 5 und einen Anodenraum 6 und eine oder mehrere, beispielsweise bis zu mehreren Hundert, dazwischenliegende Dialysetrenneinheiten.

Eine Elektrodialysetrenneinheit umfasst drei Zellen X, Y und Z. Die Zelle Y ist gegen die Zelle X durch eine selektiv für Anionen durchlässige ("anionenselektive") Membran A, gegen die Zelle Z durch eine selektiv für Kationen durchlässige ("kationenselektive") Membran K abgetrennt. Die Zelle X ist an der zur Anode hingewendeten Seite gegen den Anodenraum entweder durch eine bipolare oder kationenselektive Membran oder gegen die Zelle Z einer sich anschließenden weiteren Trenneinheit durch eine bipolare Membran AK abgetrennt, wobei die kationenselektive Seite der Membran gegen die Zelle X gerichtet ist.

Die Zelle Z ist an der zur Kathode hingewendeten Seite gegen den Kathodenraum oder gegen die Zelle X einer benachbarten Trenneinheit ebenfalls durch eine bipolare Membran AK getrennt. Die anionenselektive Seite dieser Membran ist gegen Z gerichtet. Anstelle der bipolaren Membran kann auch bei der letzten gegen die Kathode gerichteten Dialyseeinheit die Zelle Z weglassen und die Dialyseeinheit unmittelbar mit der kationenselektiven Membran der der Kathode zugewendeten Seite der Zelle Y an die Kathode abschließen.

Wird nun der Zelle Y über eine Leitung 2 eine wäßrige Alkalimetallsalzlösung, der Zelle X über die Leitung 3 im wesentlichen salzfreie wäßrige Säurelösung und der Zelle Z über die Leitung 4 im wesentlichen salzfreie wäßrige Alkalihydroxidlösung zugeführt und über die Elektroden eine Gleichspannung angelegt, beispielsweise 0,5 bis 4 Volt pro Dialysetrenneinheit, so wandern Anionen aus der Zelle y in die Zelle X sowie Kationen aus der Zelle Y in die Zelle Z. Die Kompensation der Ladungen erfolgt im Falle der Zelle X durch Protonen, die in der bipolaren Membran AK aus hereindiffundiertem Wasser gebildet werden und durch die kationenselektive Seite der Membran in die Zelle X wandern. Im Falle der Zelle Z erfolgt die Kompensation der Ladungen durch Hydroxyl-Anionen, die in der bipolaren Membran AK aus hereindiffundiertem Wasser gebildet werden und durch die anionenselektive Seite der bipolaren Membran in die Zelle Z eintreten können. An der Kathode tritt Wasserstoffentwicklung und an der Anode Sauerstoffentwicklung auf.

Durch die Elektrodialyse wird somit in Y eine an Alkalimetallsalz abgereicherte Lösung, in X eine angereicherte wäßrige Lösung einer Säure und in der Zelle Z eine angereicherte wäßrige Lösung eines Alkalihydroxids erzeugt, welche durch die Leitungen 7, 8 bzw. 9 aus der Elektrodialysevorrichtung abgeführt werden.

Die Elektrodialyse wird bei Temperaturen oberhalb des Gefrierpunktes der Lösungen bis hin zu etwa 60 ° C, vorzugsweise zwischen etwa 35 ° C und 50 ° C durchgeführt.

In die Zelle X wird als Feedstrom eine wäßrige Lösung einer dem Alkalisalz entsprechenden Säure zugeführt, deren Säuregehalt einen weiten Bereich, beispielsweise von 0,1 bis etwa 30 Gew.-% und mehr, umfassen kann und im wesentlichen von der verwendeten Säure abhängt. Im Fall von Salzsäure kann die Konzentration von 0,5 bis 32 Gew.-%, im Fall von Schwefelsäure von 0,5 bis 60 Gew.-% reichen. Vorzugsweise liegt der Säuregehalt zwischen etwa 1 bis 10 Gew.-%, insbesondere zwischen etwa 3 bis 5 Gew.-%.

In die Zelle Y wird eine wäßrige Lösung eines Alkalimetallsalzes eingeführt, deren Alkalimetallsalzgehalt einen weiten Bereich umfassen kann, beispielsweise von etwa 0,5 Gew.-% bis hin zur gesättigten Lösung. Vorzugsweise setzt man Lösungen ein, welche das Alkalimetallsalz in einer Menge enthalten, die etwa 50 bis 100% der Sättigungskonzentration entspricht. Besonders bevorzugt sind gesättigte Lösungen.

Die aus der Zelle Y als Produktstrom erhaltene abgereicherte Alkalimetallsalzlösung wird vorzugsweise nicht verworfen, sondern durch Zugabe von Alkalimetallsalz wieder gesättigt und als Feedstrom in die Zelle Y zurückgeführt.

In die Zelle Z wird als Feedstrom eine wäßrige Lösung eines dem Alkalimetallsalz entsprechenden Alkalihydroxids zugeführt, wobei der Gehalt an Alkalihydroxid einen weiten Bereich umfassen kann, beispielsweise zwischen etwa 0,5 bis etwa 50 Gew.-%. Hydroxidgehalte zwischen etwa 2 bis etwa 25 Gew.-% sind bevorzugt, insbesondere Gehalte zwischen etwa 12 bis etwa 18 Gew.-%.

Im Verlauf des erfindungsgemäßen Verfahrens wird aus der Zelle Y eine an Alkalimetallsalz abgereicherte Salzlösung erhalten, während in der Zelle X eine an Säure angereicherte und in der Zelle Z eine an Alkalihydroxid angereicherte wäßrige Lösung erhalten wird.

Die Säure des Produktstroms aus Zelle X kann beispielsweise vollständig zur Erzeugung von Kohlendioxid in einer separaten Stufe verwendet werden. In einer bevorzugten Ausführungsform wird ein Teil des säurehaltigen Produktstroms jedoch abgezweigt und in den Feedstrom von Zelle X zurückgeführt. In diesem Fall wird also ein Teil der Säure im Kreislauf geführt.

Der Säuregehalt des Feedstroms kann zu einem mehr oder weniger großen Anteil aus rückgeführter Säure stammen. Vorzugsweise stammt der gesamte Gehalt der Säure im Feedstrom aus rückgeführter Säure, so daß in das Verfahren keine Säure eingebracht werden muß.

Es besteht natürlich auch die Möglichkeit, den säurehaltigen Produktstrom, gegebenenfalls teilweise, aus dem Verfahren abzutrennen und einer anderweitigen Verwendung zuzuführen, beispielsweise eine Aufarbeitung auf reine, konzentrierte Säure vorzunehmen.

Die aus der Zelle Z abgeführte wäßrige Lösung des Alkalimetallhydroxids kann vollständig der Carbonisierungsstufe zugeführt werden. In einer bevorzugten Ausführungsform wird ein Teil des alkalimetallhydroxidhaltigen Produktstroms jedoch in den Feedstrom der Zelle Z zurückgeführt. In diesem Fall wird ein Teil des Alkalimetallhydroxids im Kreislauf geführt.

Der Alkalimetallhydroxidgehalt des Feedstroms kann zu einem mehr oder weniger großem Anteil aus rückgeführter Hydroxidlösung stammen. Vorzugsweise stammt der gesamte Gehalt des Alkalimetallhydroxids im Feedstrom aus rückgeführter Lösung, so daß in das Verfahren kein Alkalimetallhydroxid eingebracht werden muß.

Die Konzentration der Säure im aus der Zelle X abgeführten Produktstrom, des Alkalimetallhydroxids im aus der Zelle Z abgeführten Produktstrom und des Alkalimetallsalzes im aus der Zelle Y abgeführten Produktstrom ist abhängig von der Konzentration der jeweiligen Feedströme sowie den Reaktionsbedingungen der Elektrodialyse, wie Leistungsfähigkeit des verwendeten Dialysators, Verweilzeit der Feedströme in den Zellen, Temperatur, Spannung und Strom.

Je nach den Reaktionsbedingungen der Elektrodialyse kann die Konzentrationsdifferenz zwischen Eingang und Ausgang der Zellen mehr oder weniger groß sein. Vorzugsweise wählt man die Reaktionsbedingungen derart, daß die Konzentrationsdifferenz zwischen Eingang und Ausgang der Zellen nur klein ist, das heißt, daß die Konzentration der aus dem Elektrodialysator abgeführten Säure- bzw. Alkalihydroxidlösung nur wenig höher als die Konzentration der in den Elektrodialysator eingeführten Säure- bzw. Alkalihydroxidlösung liegt. Vorteilhafterweise wird dabei ein Großteil der Produktströme im Kreislauf geführt und nur ein kleiner Teil abgezogen. Die Differenz kann durch Wasserzugabe ausgeglichen werden.

Die Feedströme in die Zelle X bzw. Z sollen im wesentlichen salzfrei sein. Im Rahmen der vorliegenden Erfindung wird unter "im wesentlichen salzfrei" verstanden, daß außer zufällig vorhandenen geringen Verunreinigungen keine Salze gelöst vorhanden sind. Der Salzgehalt der Feedströme zu Zelle X und Z sollte beispielsweise kleiner als etwa 0,1 Gew.-% sein.

Die aus der Zelle Z abgeführte Alkalimetallhydroxidlösung wird, gegebenenfalls nach Abtrennen eines in den Feedstrom rückgeführten Teils, zur Carbonisierung in einen Carbonisator überführt und zur Bildung der kohlensauren Salze des Alkalimetalls mit gasförmigem $CO_2$ und/oder mit Lösungen der Hydrogencarbonate des jeweiligen Alkalimetalls vermischt.

Als Kohlendioxidgas kann beispielsweise Abgas eines Verbrennungsprozesses oder das Abgas aus der Kalksteinbrennerei eingesetzt werden. Es kann aber auch durch die Reaktion von kohlensauren Salzen, insbesondere $CaCO_3$, mit einer Säure erhalten werden. Im Verfahren der vorliegenden Erfindung wird vorzugsweise Kohlendioxid verwendet, das durch die Reaktion von $CaCO_3$ mit der aus der Zelle X abgeführten Säure freigesetzt worden ist. Dementsprechend setzt man in einer bevorzugten Ausführungsform der vorliegenden Erfindung zur Erzeugung des in Stufe b) verwendeten $CO_2$-Gases die als Produktstrom aus der Zelle X in Stufe a) erhaltene angereicherte wäßrige Säurelösung, gegebenenfalls nach Abtrennen eines in den Feedstrom der Zelle X rückgeführten Teils, zumindest teilweise mit Kalziumcarbonat um und leitet das gebildete $CO_2$-Gas in den Carbonisator in Stufe b) ein.

Die Stufe b), d.h. die Carbonisierung der in Stufe a) erhaltenen Alkalimetallhydroxidlösung, und die Stufe c), d.h. die Abtrennung der in Stufe b) erhaltenen kohlensauren Salze des Alkalimetalls, kann im Rahmen des erfindungsgemäßen Verfahren in an sich bekannter Weise durchgeführt werden. So ist beispielsweise aus der deutschen Patentschrift DE-PS 954 414 ein Verfahren zur Gewinnung von wasserfreiem, griessförmigem Alkalicarbonat bekannt, wobei Carbonatbildung und -isolierung in einem Schritt erfolgen. Hierbei bringt man in einen Wirbelofen pulvriges oder feinkörniges Alkalicarbonat ein, versetzt dieses mit heißen, $CO_2$-haltigen Gasen in wirbelnde Bewegung und sprüht in das Wirbelbett Alkalilauge ein. Auf Grund der hohen Temperatur der Gase (etwa 300 bis etwa 450°C für die Herstellung von Natriumcarbonat, etwa 250 bis etwa 400°C für die Herstellung von Kaliumcarbonat) fallen die Carbonate wasserfrei an.

Carbonisierung der Alkalimetallhydroxidlösung und Abtrennung der kohlensauren Salze des Alkalimetalls können im erfindungsgemäßen Verfahren auch räumlich und zeitlich voneinander getrennt durchgeführt werden.

Die Stufe b), also die Carbonisierung, kann beispielsweise durch Kontaktieren der aus Stufe a) abgeführten Alkalihydroxidlösung mit kohlendioxidhaltigen Gasen in einem oder mehreren Rührkesseln oder in einer oder mehreren hintereinander geschalteten Lochboden- oder Füllkörperkolonnen oder in Sprühtürmen durchgeführt werden.

Die Stufe c), also die Abtrennung der kohlensauren Salze des Alkalimetalls aus der aus dem Carbonisator abfließenden Flüssigkeit, welche die kohlensauren Salze des Alkalimetalls gelöst und gegebenenfalls als Suspension enthält, kann in an sich bekannter Weise erfolgen. Beispielsweise kann zunächst eingedickt werden, z.B. in einem Eindicker oder einer Zentrifuge erfolgen, wenn aus Stufe b) eine wäßrige Suspension erhalten wurde. Es kann auch eine Aufkonzentrierung der in Stufe b) erhaltenen Lösung oder Suspension erfolgen, z.B. durch gegebenenfalls vakuumunterstütztes Abdampfen des Wassers oder Behandlung der Lösung durch Ultrafiltration oder Reverse-Osmose.

Die hydrogenkohlensauren Salze der Alkalimetalle schließlich können durch "Übercarbonisierung", d.h. Umsetzung von Alkalilauge oder Alkalicarbonat beispielsweise mit gekühltem $CO_2$-Gas in Rieseltürmen erhalten werden. Das erhaltene Kristallisat kann anschließend durch Zentrifugation gewonnen und getrocknet werden.

Vorteile des erfindungsgemäßen Verfahrens:
- Das erfindungsgemäße Verfahren ermöglicht die energiesparende Herstellung von reinen Alkalicarbonaten bzw. Alkalihydrogencarbonaten aus Alkalisalzen und Kohlendioxid, ohne daß die Verwendung von Quecksilber notwendig ist.
- Es fallen Nebenprodukte an, z.B. anorganische Säuren sowie gegebenenfalls Salzlösungen, beispielsweise von $CaCl_2$, die auf Grund ihrer Reinheit wertvolle Zwischenprodukte darstellen.
- Das erfindungsgemäße Verfahren gestattet ohne aufwendige Nachreinigungsoperationen unmittelbar die Gewinnung von kohlensauren Salzen der Alkalimetalle, die für pharmazeutische Zwecke und als Hilfsmittel in der Lebensmittelindustrie einsetzbar sind.

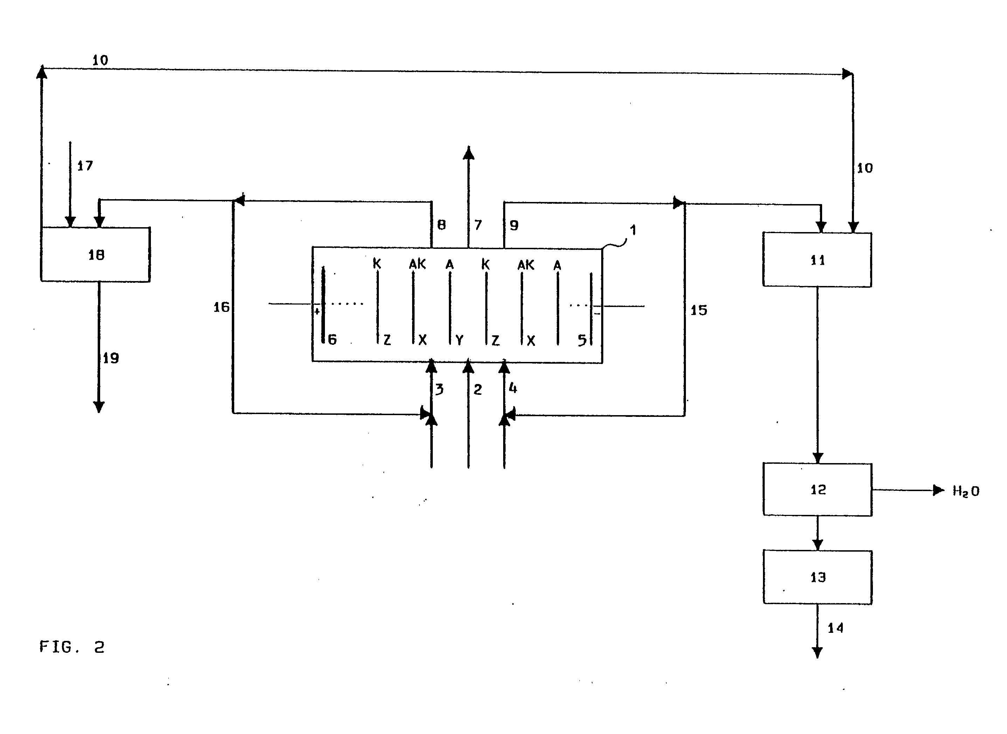

Im folgenden Beispiel wird das erfindungsgemäße Verfahren unter Bezugnahme auf Figur 2, welche das Fließschema einer bevorzugten Ausführungsform darstellt, näher erläutert, ohne den Umfang der Erfindung einzuschränken,

Als Elektrodialysatorvorrichtung 1 wurde ein kommerziell verfügbares Gerät mit 8 Trenneinheiten, einer Spannung von 20 Volt und einer Stromstärke von 10 Ampere verwendet; die prinzipielle Arbeitsweise eines solchen Dialysators wurde unter Bezugnahme auf Figur 1 bereits erläutert. Die Elektrodialyse wurde bei etwa 40°C durchgeführt.

Durch eine Rohrleitung 2 wurde eine wässrige, gesättigte Kaliumchloridlösung (Gehalt an Kaliumchlorid etwa 28 Gew.-%), die etwa 1000 ppm Magnesiumchlorid enthielt, zunächst durch einen Filter (0,1 mm Siebweite) zur Abtrennung etwaig enthaltener Feststoffe geführt. Die den Filter verlassende Lösung wurde in die Zellen Y als Feedstrom eingeleitet.

In die Zellen X wurde über eine Zuführungsleitung 3 eine wäßrige Salzsäurelösung mit einer Konzentration von etwa 4 Gew.-% HCl eingeleitet.

In die Zellen Z wurde über eine Zuführungsleitung 4 eine Kalilauge mit einer Konzentration von etwa 15 Gew.-% KOH eingeleitet.

Die angelegte Gleichspannung von etwa 20 Volt bewirkte nun das Übertreten von $Cl^-$-Ionen aus den Zellen Y in die Zellen X und von $K^+$-Ionen in die Zellen Z.

Die Volumengeschwindigkeit der Feedströme wurde so eingeregelt, daß aus Zellen X eine etwa 5-prozentige Salzsäurelösung und aus den Zellen Z eine etwa 18-prozentige Kalilauge als Produktströme erhalten wurden. Die aus der Zelle Y austretende KCl-Lösung wurde nach Zugabe von frischem KCl bis zur Sättigungsgrenze von etwa 28 Gew.-% zurückgeführt.

Diese gesättigte Kaliumchloridlösung wurde dann als Feedstrom über den Filter und die Leitung 2 in die Zellen Y eingeleitet.

Die auf etwa 5 Gew.-% HCl angereicherte Salzsäurelösung wurde aus den Zellen X über Rohrleitung 8 abgeleitet. Ein Teil des Produktstroms wurde aus der Leitung 8 über die Leitung 16 abgezweigt und mit Wasser vermischt, so daß eine Salzsäurelösung mit etwa 4 Gew.-% HCl erhalten wurde. Diese Salzsäurelösung stellte den Feedstrom für die Zellen X dar. Auf diese Weise wurde ein Teil der Salzsäurelösung im Kreislauf geführt.

Aus den Zellen Z wurde eine Kalilauge mit einem Gehalt von etwa 18 Gew.-% KOH abgezogen. Ein Teil des Produktstroms wurde aus der Leitung 9 über die Leitung 15 abgezweigt und mit Wasser vermischt, so daß eine Kaliumhydroxidlösung mit einer Konzentration von etwa 15 Gew.-% KOH erhalten wurde. Diese Lösung stellte den Feedstrom für die Zellen Z dar. Auf diese Weise wurde ein Teilstrom der Kaliumhydroxidlösung im Kreislauf geführt.

Der nicht für die Rückführung abgezweigte Strom der salzsauren Lösung in der Rohrleitung 8 wurde in einen Kalklöser 18 eingeleitet, in welchen der Säuremenge entsprechend kontinuierlich gemahlener Kalkstein über eine Vibrationsrinne 17 zugeführt wurde. Die bei der Reaktion zwischen der wässrigen Salzsäurelösung und dem Kalkstein entstehende Kalziumchlorid-Lösung wurde über einen Überlauf aus dem Kalklöser 18 entnommen und über eine Leitung 19 abgeführt, während das bei der Reaktion entstehende Kohlendioxid-Gas über einen (in der Fig. 2 nicht abgebildeten) Wasser-Abscheider über die Leitung 10 in einen Carbonisator 11 eingedüst wurde. In den Carbonisator 11 wurde gleichzeitig der nicht für die Rückführung abgezweigte Strom der Kaliumhydroxidlösung über die Leitung 9 eingespeist. Als Carbonisator wurde eine an sich bekannte Kolonne verwendet. Die den Carbonisator verlassende Suspension wurde eingeengt und in einen Kristallisator 12 eingeleitet und in Feststoff und im wesentlichen feststofffreie Lösung getrennt. Der Feststoff wurde in einen Trockner 13 überführt, dort mittels Heißluft bei einer Temperatur von etwa 110 bis 120 °C getrocknet und über die Leitung 14 aus dem Trockner ausgetragen. Die hierbei erhaltene Hydratpottasche der Formel $K_2CO_3 \cdot 1{,}5\ H_2O$ besaß eine Reinheit von 99,1 % und enthielt nur noch 10 ppm $MgCl_2$. Die Ausbeute, bezogen auf eingesetztes KCl betrug etwa 85 %.

**Patentansprüche**

1. Verfahren zur Herstellung von kohlensauren Salzen von Alkalimetallen aus wäßrigen anorganischen Alkalimetallsalzlösungen unter überführen der wäßrigen Alkalimetallsalzlösung in eine Alkalimetallhydroxidlösung und deren anschließender Carbonisation, dadurch gekennzeichnet, daß man

a) die Alkalimetallsalzlösung einer Elektrodialyse unterwirft, indem man in einen Elektrodialysator, in welchem sich zwischen einer Plus- und einer Minuselektrode mindestens eine an den den Elektroden zugewandten Seiten durch bipolare oder kationenselektive Membranen begrenzte und in 3 Zellen X, Y und Z unterteilte Dialyseeinheit befindet, worin die mittlere Zelle Y von der der Pluselektrode zugewandten Zelle X durch eine anionenselektive Membran und von der der Minuselektrode zugewandten Zelle Z durch eine kationenselektive Membran abgeteilt ist, und die Zelle X auf der der Pluselektrode zugewandten Seite von der kationenselektiven Schicht der bipolaren Membran und die Zelle Z auf der der Minuselektrode zugewandten Seite von der anionenselektiven Schicht der bipolaren Membran begrenzt sind, als Feedstrom in Zelle Y die wäßrige anorganische Alkalimetallsalzlösung einführt, als Feedstrom in Zelle X im wesentlichen salzfreie wäßrige Lösung der dem Alkalimetallsalz entsprechenden Säure einführt und als Feedstrom in Zelle Z eine im wesentlichen salzfreie wässrige Lösung des dem Alkalimetallsalz entsprechenden Alkalimetallhydroxids einführt, durch Anlegen einer Gleichstromspannung elektrischen Strom durch den Elektrodialysator leitet und als Produktstrom aus Zelle Y eine abgereicherte Alkalimetallsalzlösung abführt, aus Zelle X eine angereicherte wäßrige Lösung der dem Alkalimetallsalz entsprechenden anorganischen Säure abführt und als Produktstrom aus Zelle Z eine angereicherte Lösung des dem Alkalimetallsalz entsprechenden Alkalimetallhydroxides abführt und

b) die unter a) erhaltene Alkalimetallhydroxidlösung zur Carbonisierung in einen Carbonisator überführt und zur Bildung der kohlensauren Salze des Alkalimetalls mit gasförmigem $CO_2$ und/oder einer Lösung des Hydrogencarbonats des Alkalimetalls vermischt und

c) die unter b) gebildeten kohlensauren Salze des Alkalimetalls abtrennt.

2. Verfahren nach Anspruch 1, dadurch gekennzeichnet, daß man als Alkalimetallsalz ein Alkalimetallhalogenid vorzugsweise Chlorid einsetzt.

3. Verfahren nach Anspruch 1, dadurch gekennzeichnet, daß man als Alkalimetallsalz ein Kaliumsalz einsetzt.

4. Verfahren nach Anspruch 1, dadurch gekennzeichnet, daß man in Stufe a) einen Teil der als Produktstrom aus Zelle X abgeführten wäßrigen Säurelösung in den Feedstrom zu Zelle X rückführt.

5. Verfahren nach Anspruch 4, dadurch gekennzeichnet, daß man dem Feedstrom eine solche Menge wäßriger Säurelösung zuführt, daß eine Säurekonzentration von 1 bis 10, vorzugsweise 3 bis 5 Gew.-%, erreicht wird.

6. Verfahren nach Anspruch 1, dadurch gekennzeichnet, daß man in Stufe a) einen Teil der als Produktstrom von Zelle Z abgeführten wäßrigen Alkalimetallhydroxidlösung in den Feedstrom zu Zelle Z rückführt.

7. Verfahren nach Anspruch 6, dadurch gekennzeichnet, daß man dem Feedstrom eine solche Menge an wäßriger Alkalimetallhydroxidlösung zuführt, daß eine Alkalihydroxidkonzentration von 0,5 bis 50, vorzugsweise 2 bis 25, insbesondere 12 bis 18 Gew.-%, erreicht wird.

8. Verfahren nach Anspruch 1, dadurch gekennzeichnet, daß man zur Erzeugung des in Stufe b) verwendeten $CO_2$-Gases die als Produktstrom aus Zelle X in Stufe a) erhaltene angereicherte wäßrige Säurelösung zumindest teilweise mit Kalziumcarbonat umsetzt und das

gebildete $CO_2$-Gas in den Carbonisator in Stufe b) einleitet.

9. Verfahren nach Anspruch 1, dadurch gekennzeichnet, daß der Feedstrom für Zelle Y eine gesättigte Alkalimetallsalzlösung ist.

10. Verfahren nach Anspruch 9, dadurch gekennzeichnet, daß man die aus Zelle Y als Produktstrom erhaltene abgereicherte Alkalimetallsalzlösung durch Zugabe von Alkalimetallsalz wieder sättigt und als Feedstrom in Zelle Y zurückführt.

FIG.1

FIG.1

FIG. 2

K  AK  A  K  AK  A

Z  X  Y  Z  X  5

6  Z

17  18  16  8  7  9  1  15  11  10

19  3  2  4  12  H$_2$O  13  14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 219 396 (A.B. GANCY) * Spalte 1, Zeilen 5-14,61-68; Spalte 2, Zeilen 1-50 * | 1,2,4,6 | B 01 D 61/44 |
| Y | EP-A-0 249 925 (THE GRAVER CO.) * Spalte 4, Zeile 40 - Spalte 5, Zeile 17; Spalte 5, Zeilen 48-58; Spalte 6, Zeilen 28-30; Spalte 7, Zeilen 11-33 * | 1,4,6, 10 | |
| Y | DE-A- 954 414 (BADISCHE ANILIN & SODA-FABRIK) * Seite 1, Zeilen 1-8; Seite 3, Anspruch 1 * | 1,4,6, 10 | |
| A | EP-A-0 121 611 (ALLIED CORP.) * Seite 3, Zeile 7 - Seite 4, Zeile 19; Seiten 30,31; Ansprüche 2,3,4 * | 1-3,9 | |
| | | | RECHERCHIERTE SACHGEBIETE (Int. Cl.5) |
| | | | B 01 D |

Der vorliegende Recherchenbericht wurde für alle Patentansprüche erstellt

| Recherchenort | Abschlußdatum der Recherche | Prüfer |
|---|---|---|
| DEN HAAG | 10-09-1990 | GONZALEZ ARIAS M.L. |

EPO FORM 1503 03.82 (P0403)